# EUROPEAN PATENT APPLICATION

(11) **EP 4 023 399 A1**
(43) Date of publication of application: **06.07.2022**
(21) Application number: 19943524.9
(22) Date of filing: 29.08.2019
(51) Int. Cl.: B25J 17/00, F16L 19/02

(54) **CONNECTION ASSEMBLY FOR ROBOT JOINTS**

(71) Applicant: Rethink Robotics GmbH, 44894 Bochum (DE)
(72) Inventor: YANG, Yong, Beijing 102200 (CN); ZHANG, Sheng, Langfang, Hebei 065000 (CN); JIANG, Chao, Beijing 100071 (CN)
(74) Representative: Grünecker Patent- und Rechtsanwälte PartG mbB
(86) International application number: PCT/CN2019/103417
(87) International publication number: WO 2021/035637

(57) **Abstract**

A connection assembly for robot joints, including: a first joint (100) provided with a first connection end (120), where a connection base (300) is provided on the first connection end (120), and the connection base (300) is provided with a first connection protrusion (340) extending radially outward; a second joint (200) provided with a second connection end, where a connector (500) is provided on the second connection end, and an external thread is provided on an outer circumference of the connector (500); and a connection nut (400) adapted to be rotatably sleeved on the connector (500), where an internal thread is provided on an inner circumference of the connection nut (400), a second connection protrusion (410) extending radially inward is formed at an end of the connection nut (400) facing the first connection end (120), and the second connection protrusion (410) is sleeved on a radial outer side of the connection base (300), such that the first connection protrusion (340) is accommodated in a space, facing the second joint (200), formed by the second connection protrusion (410). The problem of complicated assembly and disassembly of joints of a collaborative robot is solved.

## Description

### TECHNICAL FIELD

The present invention relates to the field of collaborative robot devices, in particular, to a connection assembly for robot joints.

### .BACKGROUND

Collaborative robots are robots designed to work alongside humans to accomplish specific tasks and actions. Therefore, there is a need for these collaborative robots to be able to assemble and disassemble quickly and be a flexible tool for humans. However, most of the assembly and disassembly processes need to be implemented by bolts or special tools, which brings a lot of inconvenience to the application.

In the prior art, joints of collaborative robots are usually connected by many bolts. In such a structural solution, it is inevitable to deal with the mounting and removal of many bolts during the assembly and disassembly processes. For collaborative robots used as a tool for working alongside humans, such assembly and disassembly operations are very time-consuming, and also require special tools for mounting and removing bolts. Therefore, quick replacement of joints is not feasible.

### SUMMARY

The main object of the present invention is to provide a connection assembly for robot joints, so as to solve the problem of complicated assembly and disassembly of joints of a collaborative robot in the prior art.

In order to achieve the above object, according to one aspect of the present invention, provided is a connection assembly for robot joints, including: a first joint provided with a first connection end, where a connection base is provided on the first connection end, and the connection base is provided with a first connection protrusion extending radially outward; a second joint provided with a second connection end, where a connector is provided on the second connection end, and an external thread is provided on an outer circumference of the connector; and a connection nut adapted to be rotatably sleeved on the connector, where an internal thread is provided on an inner circumference of the connection nut, a second connection protrusion extending radially inward is formed at an end of the connection nut facing the first connection end, and the second connection protrusion is sleeved on a radial outer side of the connection base, such that the first connection protrusion is accommodated in a space, facing the second joint, formed by the second connection protrusion.

During assembly, after the connector is inserted into the connection base, the connection nut is screwed onto the connector, so that the first joint is firmly connected to the second joint; during disassembly, after the connection nut is unscrewed from the connector, the connector is pulled out from the connection base, so that the first joint and the second joint are separated from each other. Here, the first connection protrusion and the first connection end define the movement range of the second connection protrusion, and further defines the movement range of the connection nut, so that the screwing operation can be performed easily and reliably.

In this way, by inserting the connector into the connection base, the first joint and the second joint cannot be rotated and bent with respect to each other, and then by screwing the connection nut onto the connector, due to the blocking effect of the first connection protrusion on the second connection protrusion, the first joint and the second joint cannot move with respect to each other in an axial direction. Thus, the joint and the second joint can be firmly connected together only by screwing the connection nut from the outside, which is simple and time-saving compared with the prior art.

Further, according to an embodiment of the present application, the connection base includes an insertion slot, an end of the connector facing the first joint is provided with an insertion bump extending axially toward the first joint, and the insertion bump is fixedly inserted in the insertion slot.

In this way, by means of the matching connection formed by inserting the insertion bump into the insertion slot, the connector and the connection base cannot be rotated with respect to each other, thereby achieving fixation of the first joint and the second joint in this degree of freedom.

Further, according to an embodiment of the present invention, the connection base includes: a first ring section; and a second ring section; where the first ring section and the second ring section are oppositely disposed on the first connection protrusion, and the insertion slot is formed between the first ring section and the second ring section in a circumferential direction of the connection base.

In this way, by configuring a connection ring into two parts to form the insertion slot, the weight of the connection base is reduced, and the production process of the connection base is simplified because there is no need to specially process the insertion slot.

Further, according to an embodiment of the present invention, a wire groove is provided on an end surface of the connection base facing the first joint, and the wire groove extends from an outer circumference to an inner circumference in a radial direction of the connection base.

In this way, not only is a wire passage for wiring provided, but the weight of the connection base is also reduced.

Further, according to an embodiment of the present invention, an axial upper screw hole is provided on the connection base, and the connection base is fixed on the first connection end by a bolt passing through the upper screw hole.

In this way, the connection base is fixed on the first connection part by standard parts such as bolt connection, and simple assembly and disassembly of the connection base is achieved.

Further, according to an embodiment of the present invention, a connection ring wall extending outward is provided on the first connection end, and an inner circumferential surface of the connection ring wall abuts against an outer circumferential surface of the first connection protrusion.

In this way, the connection base is protected by providing the connection ring wall, and the connection ring wall also has a certain positional limiting function.

Further, according to an embodiment of the present invention, a sealing ring groove is provided on an inner circumferential surface of the connection ring wall, a sealing ring is provided in the sealing ring groove through interference fit, and an inner circumference of the sealing ring is in close contact with an outer circumferential surface of the second connection protrusion.

In this way, the provision of the sealing ring can prevent dirt such as dust from entering the first joint.

Further, according to an embodiment of the present invention, an inner projection extending radially inward is formed on an inner circumference of the connector, a lower screw hole is formed on the inner projection, and the connector can be fixed on the second joint by a bolt.

In this way, the connector is fixed on the second joint through bolt connection, preferably using six bolts, so that the connector can be easily assembled and disassembled.

Further, according to an embodiment of the present invention, the second joint includes: a third connection protrusion extending radially inward on an inner circumference of the second connection end, where an accommodation groove is provided on the third connection protrusion; and a joint flange, where a fourth connection protrusion extending axially away from the first joint is formed at an end of the joint flange facing away from the first joint, the fourth connection protrusion is accommodated in the accommodation groove, and flange screw holes are provided on an edge of the joint flange; where the joint flange is fixed on the third connection protrusion by a bolt.

In this way, by means of the provision of the joint flange, the connector according to the present invention can be better mounted on the second joint, and is suitable for various joints. Moreover, the sealing performance is improved through the structure in which the connection protrusion fits the accommodation groove.

Further, according to an embodiment of the present invention, a fifth connection protrusion extending axially toward the second joint is formed at an end of the connector facing the second joint, a connection projection extending axially upward is formed at the top of the joint flange, and the connector is sleeved on the connection projection.

In this way, the connector and the joint flange are firmly connected through the structure in which the connection protrusion fits the connection projection.

Further, according to an embodiment of the present invention, the connection nut includes: an annular base portion, where an internal thread is formed on an inner circumference of the base portion; and an annular step portion provided on the base portion, where the second connection protrusion is formed on the step portion.

In this way, the connection nut well fits the shape of the connection base portion to fulfill its function.

Further, according to an embodiment of the present invention, a radial through hole is formed on the base portion of the connection nut.

In this way, for example, a tool such as a hex key can be inserted into the through hole for better screwing.

By applying the technical solution of the present invention, the connection assembly for robot joints is provided to achieve simple and time-saving assembly and disassembly of robot joints by simple screwing from the outside. Thus, the problem of complicated and time-consuming assembly and disassembly of robot joints in the prior art is solved.

### BRIEF DESCRIPTION OF THE DRAWINGS

The accompanying drawings forming a part of the present application are used to provide further understanding of the present invention, and the exemplary embodiments of the present invention and their descriptions are used to explain the present invention and do not constitute an improper limitation of the present invention. In the accompanying drawings,
FIG. 1 shows a schematic diagram of an embodiment of a connection assembly for robot joints according to the present invention;
FIG. 2 shows a schematic diagram of a connection base in an embodiment of an connection assembly for robot joints according to the present invention;
FIG. 3 shows a schematic diagram of a connection nut in an embodiment of a connection assembly for robot joints according to the present invention;
FIG. 4 shows a schematic diagram of a connector in an embodiment of a connection assembly for robot joints according to the present invention;
FIG. 5 shows a cross-sectional view of a preferred embodiment of a connection assembly for robot joints according to the present invention in an assembled state.

### DETAILED DESCRIPTION

It should be noted that the embodiments in the present application and the features in the embodiments may be combined with each other in the case of no conflict. The present invention will be described in detail below with reference to the accompanying drawings and in conjunction with the embodiments.

It should be noted that, unless otherwise specified, all technical and scientific terms used in the present application have the same meanings as commonly understood by a person skilled in the art.

In the present invention, unless otherwise stated, direction words such as "upper, lower, top, and bottom" are used generally with respect to the direction shown in the drawings, or with respect to a component itself in a vertical, perpendicular or gravitational direction; similarly, for the convenience of understanding and description, "inner and outer" refer to the inner and outer relative to the contour of each component itself, but the above-mentioned direction words are not used to limit the present invention.

In order to solve the problem of complicated and time-consuming assembly and disassembly of robot joints in the prior art, a connection assembly for robot joints is provided.

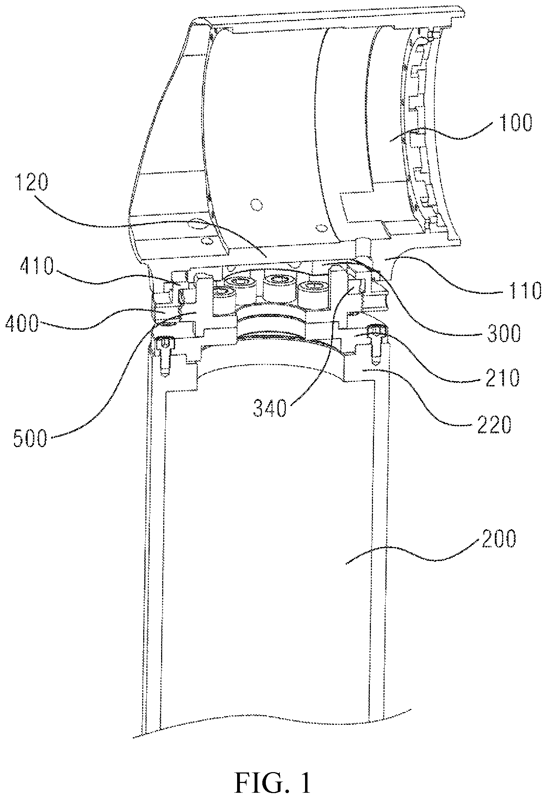

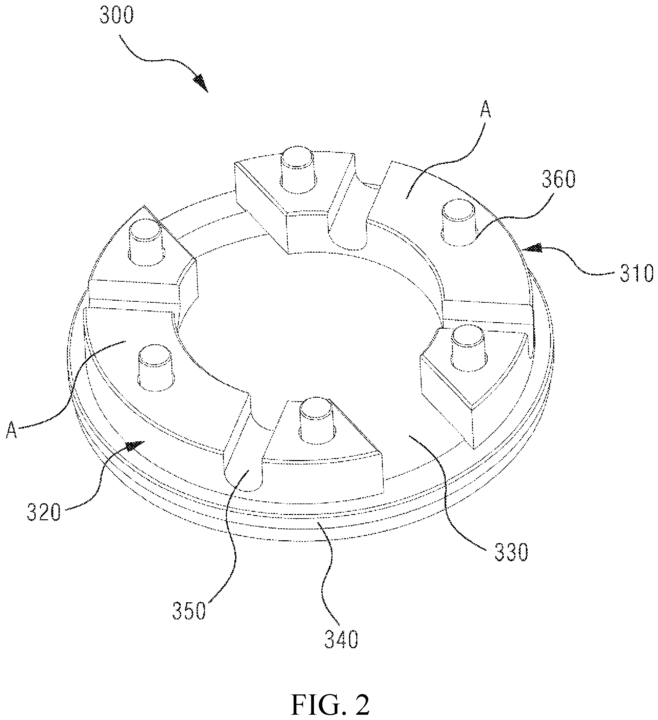

FIG. 1 shows a schematic diagram of an embodiment of a connection assembly for robot joints according to the present invention. As shown in FIG. 1, the connection assembly for robot joints includes a first joint 100 provided with a first connection end 120. A connection base 300 is provided on the first connection end 120, and the connection base 300 is provided with a first connection protrusion 340 extending radially outward. The connection assembly further includes: a second joint 200 provided with a second connection end, where a connector 500 is provided on the second connection end, and an external thread is provided on an outer circumference of the connector 500; and a connection nut 400 adapted to be rotatably sleeved on the connector 500, where an internal thread is provided on an inner circumference of the connection nut 400. A second connection protrusion 410 extending radially inward is formed at an end of the connection nut 400 facing the first connection end 120, and the second connection protrusion 410 is sleeved on a radial outer side of the connection base 300 of the first joint 100, such that the first connection protrusion 340 is accommodated in a space, facing the second joint, formed by the second connection protrusion 410. That is, in FIG. 2, the second connection protrusion 410 is located on an upper side of the first connection protrusion 340.

During assembly, first, the connection nut 400 movably sleeved on the radial outer side of the connection base 300 is moved up; after the connector 500 is inserted into the connection base 300, the connection nut 400 is located above the connector 500, and the connection nut 400 is screwed onto the connector 500 through the internal thread of the connection nut 400 and the external thread of the connector 500 matching the same, so that the first joint 100 and the second joint 200 are firmly connected. During disassembly, after the connection nut 400 is unscrewed from the connector 500, the connector 500 is pulled out from the connection base 300, so that the first joint 100 and the second joint 200 are separated from each other. Here, the first connection protrusion 340 and the first connection end define the movement range of the second connection protrusion 410, and further defines the movement range of the connection nut 400, so that the screwing operation can be performed easily and reliably.

A connection ring wall 110 extending outward is provided on the first connection end, and an inner circumferential surface of the connection ring wall 110 abuts against an outer circumferential surface of the first connection protrusion 410.

On the other hand, the second joint 200 includes: a third connection protrusion 220 extending radially inward on an inner circumference of the second connection end, where an accommodation groove is provided on the third connection protrusion 220; and a joint flange 210, where a fourth connection protrusion extending axially away from the first joint 100 is formed at an end of the joint flange 210 facing away from the first joint 100, the fourth connection protrusion is accommodated in the accommodation groove, and flange screw holes are provided on an edge of the joint flange 210. The joint flange 210 is fixed on the third connection protrusion 220 by bolts.

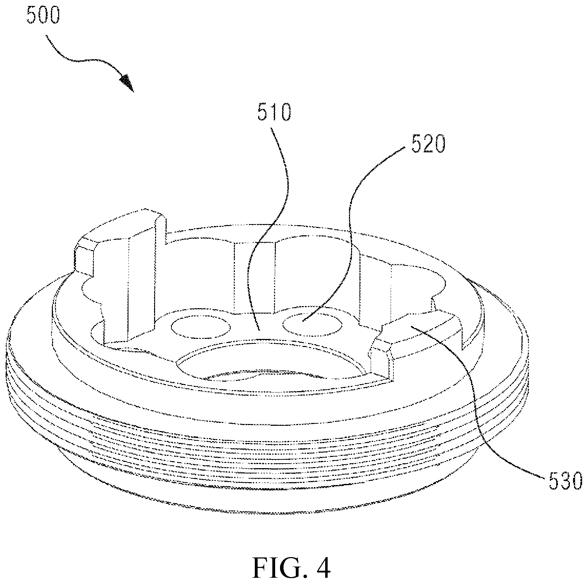

FIG. 2 shows a schematic diagram of a connection base in an embodiment of a connection assembly for robot joints according to the present invention. As shown in FIG. 2, the connection base 300 includes a first ring section 310 and a second ring section 320. The first ring section 310 and the second ring section 320 are radially oppositely disposed on the first connection protrusion 340, and insertion slots 330 are formed between the first ring section 310 and the second ring section 320 in a circumferential direction of the connection base 300 to accommodate insertion bumps 530 shown in FIG. 4. Axial upper screw holes 360 are provided on the connection base 300, and the connection base 300 is fixed on the first connection end 120 by bolts passing through the upper screw holes 360.

Preferably, wire grooves 350 are provided on an end surface A of the connection base 300 facing the first joint 100, and the wire grooves 350 extend from an outer circumference to an inner circumference in a radial direction of the connection base 300. In this way, not only is a wire passage for wiring provided, but the weight of the connection base 300 is also reduced.

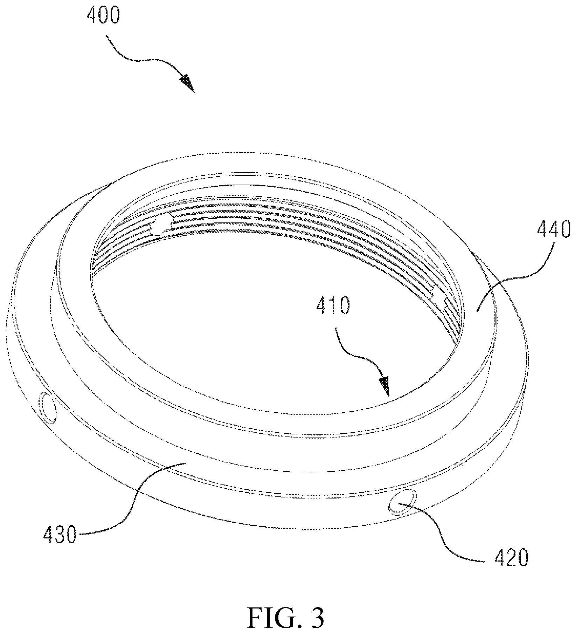

FIG. 3 shows a schematic diagram of a connection nut in an embodiment of a connection assembly for robot joints according to the present invention. As shown in FIG. 3, the connection nut 400 includes an annular base portion 430, and an internal thread is formed on an inner circumference of the base portion. An annular step portion 440 is provided on the base portion 430, the second connection protrusion 410 is formed on the step portion, and radial through holes 420 are formed on the base portion 430 of the connection nut 400. Here, there are preferably four radial through holes, and the four radial through holes are equidistantly distributed in a circumferential direction of the base portion 430. Here, for example, a tool such as a hex key can be inserted into the through hole for better screwing.

FIG. 4 shows a schematic diagram of a connector 500 in an embodiment of a connection assembly for robot joints according to the present invention. As shown in FIG. 4, an inner projection 510 extending radially inward is formed on an inner circumference of the connector 500, lower screw holes 520 are formed on the inner projection 510, and the connector 500 can be fixed on the second joint 200 by bolts passing through the lower screw holes 520. One end (the upper end in this drawing) of the connector 500 is further provided with insertion bumps 530 extending axially outward, and the insertion bumps 530 are inserted into the connection base 300, particularly the insertion slots 330 shown in FIG. 2, during mounting to implement circumferential positioning of the connector 500 in the connection base 300.

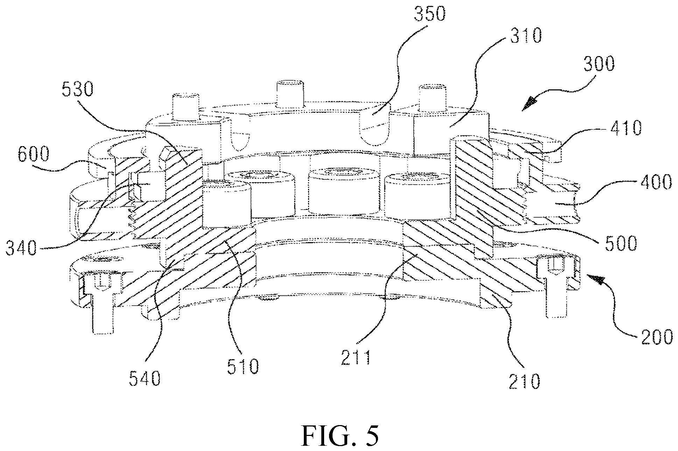

FIG. 5 shows a cross-sectional view of a preferred embodiment of a connection assembly for robot joints according to the present invention in an assembled state. As shown in FIG. 5 , the connection base 300 is fixed, by bolts, on the connection end of the first joint which is not shown. The insertion bumps 530 on the connector 500 are inserted into the insertion slots 330 of the connection base 300, so that the insertion bumps 530 abut against end surfaces of the two ring sections of the connection ring 310, thereby being fixed therein. The top surface of the first connection protrusion 340 is in contact with the bottom surface of the second connection protrusion 410, limiting the axial movement of the connection nut 400. Herein, a fifth connection protrusion 540 extending axially away from the first joint 100 is formed at the bottom of the connector 500, a connection projection 211 extending axially toward the first joint 100 is formed at an end of the joint flange 210 facing the first joint 100, and the connector 500 is sleeved on the connection projection 211. Therefore, a compact and firm structure of the connection components is achieved by the firm fit of the connection protrusions and projection.

During assembly, the connection nut 400 is first sleeved on the outer side of the connection ring 310 of the connection base 300, so that the second connection protrusion 410 of the connection nut 400 is pressed against the first connection protrusion 340 of the connection base 300. Then, the connection base 300 together with the connection nut 400 is fixed on the first connection end 120 by bolts. On the other hand, the joint flange 220 is first fixed on the second joint 200 by bolts, and then the connector 500 is connected to the joint flange 220 by bolts. It should be pointed out here that the connector 500 and the joint flange 220 can be exchanged in connection sequence. In this way, assembly of the various parts is completed and subsequent operations can be performed.

In addition, preferably, a sealing ring groove (not shown) is provided on an inner circumferential surface of a connection ring wall 110, a sealing ring 600 is provided in the sealing ring groove through interference fit, and an inner circumference of the sealing ring 600 is in close contact with an outer circumferential surface of the second connection protrusion 410. The provision of the sealing ring can prevent dirt such as dust from entering the first joint.

Here, the present invention is implemented in the most preferred manner, thereby solving the problem of complicated and time-consuming assembly and disassembly of robot joints in the prior art.

From the above description, it can be seen that the above-mentioned embodiments of the present invention achieve the following technical effects:
1. the assembly and disassembly operations are simple;
2. compared with the prior art, it saves time significantly;
3. the production process is simple.

Apparently, the embodiments described above are only some of the embodiments of the present invention, but not all of the embodiments. Based on the embodiments in the present invention, all other embodiments obtained by a person skilled in the art without creative work shall fall within the scope of protection of the present invention.

It should be noted that the terminology used herein is for the purpose of describing specific embodiments only, and is not intended to limit the exemplary embodiments according to the present application. As used herein, the singular forms are also intended to include the plural references unless the context clearly dictates otherwise. In addition, it should also be understood that when the terms "comprise" and/or "include" are used in the description, they indicate the presence of features, steps, operations, devices, assemblies, and/or combinations thereof.

It should be noted that the terms "first", "second" or the like in the description, claims and the above drawings of the present application are used to distinguish similar objects, and are not necessarily used to describe a specific sequence or order. It should be understood that data so used may be exchanged in appropriate circumstances so that the embodiments of the present application described herein can be practiced in sequences other than those illustrated or described herein.

The above descriptions are only preferred embodiments of the present invention, and are not intended to limit the present invention. For a person skilled in the art, various modifications and changes may be made to the present invention. Any modification, equivalent replacement, improvement, or the like made within the spirit and principle of the present invention shall be included within the scope of protection of the present invention.

## Claims

1. A connection assembly for robot joints, comprising:
a first joint (100) provided with a first connection end (120), wherein a connection base (300) is provided on the first connection end (120), and the connection base (300) is provided with a first connection protrusion (340) extending radially outward;
a second joint (200) provided with a second connection end, wherein a connector (500) is provided on the second connection end, and an external thread is provided on an outer circumference of the connector (500); and
a connection nut (400) adapted to be rotatably sleeved on the connector (500), wherein an internal thread is provided on an inner circumference of the connection nut (400);
wherein a second connection protrusion (410) extending radially inward is formed at an end of the connection nut (400) facing the first connection end (120), and the second connection protrusion (410) can be sleeved on a radial outer side of the connection base (300), such that the first connection protrusion (340) is accommodated in a space, facing the second joint (200), formed by the second connection protrusion (410).

2. The connection assembly according to claim 1, wherein the connection base (300) comprise an insertion slot (330), an end of the connector (500) facing the first joint (100) is provided with an insertion bump (530) extending axially toward the first joint (100), and the insertion bump (530) is fixedly inserted in the insertion slot (330).

3. The connection assembly according to claim 2, wherein the connection base (300) comprises:
a first ring section (310); and
a second ring section (320);
the first ring section (310) and the second ring section (320) are oppositely disposed on the first connection protrusion (340), and the insertion slot (330) is formed between end surfaces of the first ring section (310) and the second ring section (320) in a circumferential direction of the connection base (300).

4. The connection assembly according to claim 1, wherein a wire groove (350) is provided on an end surface of the connection base (300) facing the first joint (100), and the wire groove (350) extends from an outer circumference to an inner circumference in a radial direction of the connection base (300).

5. The connection assembly according to claim 1, wherein an axial upper screw hole (360) is provided on the connection base (300), and the connection base (300) is fixed on the first connection end (120) by a bolt passing through the upper screw hole (360).

6. The connection assembly according to claim 1, wherein a connection ring wall (110) extending outward is provided on the first connection end (120), and an inner circumferential surface of the connection ring wall (110) abuts against an outer circumferential surface of the first connection protrusion (410).

7. The connection assembly according to claim 6, wherein a sealing ring groove is provided on the inner circumferential surface of the connection ring wall (110), a sealing ring (600) is provided in the sealing ring groove through interference fit, and an inner circumference of the sealing ring (600) is in close contact with an outer circumferential surface of the second connection protrusion (410).

8. The connection assembly according to claim 1, wherein an inner projection (510) extending radially inward is formed on an inner circumference of the connector (500), a lower screw hole (520) is formed on the inner projection (510), and the connector (500) is fixed on the second joint (200) by a bolt.

9. The connection assembly according to claim 1, wherein the second joint (200) comprises:
a third connection protrusion (220) extending radially inward on an inner circumference of the second connection end, wherein an accommodation groove is provided on the third connection protrusion (220); and
ajoint flange (210), wherein a fourth connection protrusion extending axially away from the first joint (100) is formed at an end of the joint flange (210) facing away from the first joint (100), the fourth connection protrusion is accommodated in the accommodation groove, and flange screw holes are provided on an edge of the joint flange (210);
wherein the joint flange (210) is fixed on the third connection protrusion (220) by a bolt.

10. The connection assembly according to claim 9, wherein a fifth connection protrusion (540) extending axially toward the second joint (200) is formed at an end of the connector (500) facing the second joint (200), a connection projection (211) extending axially toward the first joint (100) is formed at an end of the joint flange (210) facing the first joint (100), and the connector (500) is sleeved on the connection projection (211).

11. The connection assembly according to claim 1, wherein the connection nut (400) comprises:
an annular base portion 430, wherein an internal thread is formed on an inner circumference of the base portion (430); and
an annular step portion 440 provided on the base portion (430), where the second connection protrusion (410) is formed on the step portion.

12. The connection assembly according to claim 11, wherein a radial through hole (420) is formed on the base portion (430) of the connection nut (400).
